# EUROPEAN PATENT SPECIFICATION

(11) **EP 2 911 089 B1**
(45) Date of publication and mention of the grant of the patent: **04.04.2018**
(21) Application number: 14156530.9
(22) Date of filing: 25.02.2014
(51) Int. Cl.: G06K 9/00

(54) **Method and system for handwriting and gesture recognition**
Verfahren und System zur Erkennung von Handschrift und Gesten
Procédé et système de reconnaissance de geste et d'écriture manuscrite

(43) Date of publication of application: 26.08.2015
(73) Proprietor: Karlsruher Institut für Technologie, 76131 Karlsruhe (DE)
(72) Inventor: Amma, Christoph, 76133 Karlsruhe (DE); Schultz, Tanja, 69121 Heidelberg (DE)
(74) Representative: Bittner, Peter

(56) References cited:
- CHRISTOPH AMMA ET AL: "Airwriting recognition using wearable motion sensors", PROCEEDINGS OF THE 1ST AUGMENTED HUMAN INTERNATIONAL CONFERENCE ON, AH '10, 1 January 2010 (2010-01-01), pages 1-8, XP055124706, New York, New York, USA DOI: 10.1145/1785455.1785465 ISBN: 978-1-60-558825-4
- CHRISTOPH AMMA ET AL: "Airwriting", PERSONAL AND UBIQUITOUS COMPUTING, SPRINGER VERLAG, LONDON, GB, vol. 18, no. 1, 1 January 2014 (2014-01-01), pages 191-203, XP058038383, ISSN: 1617-4909, DOI: 10.1007/S00779-013-0637-3
- Anne-Laure Bianne ET AL: "Context-dependent HMM modeling using tree-based clustering for the recognition of handwritten words", SPIE - International Society for Optical Engineering. Proceedings, vol. 7534, 17 January 2010 (2010-01-17), XP055344406, US ISSN: 0277-786X, DOI: 10.1117/12.838806 ISBN: 978-1-5106-0753-8

## Description

### Technical Field

The present invention generally relates to electronic data processing, and more particularly, relates to methods, computer program products and systems for handwriting and gesture recognition.

### Background

Multiple approaches for systems and methods for electronic character recognition exist in the art. Some approaches are directed to handwriting recognition of characters written onto a two-dimensional surface, such as a touch screen or specific electronic paper. In such scenarios, a decomposition of characters into strokes is suggested in the prior art. In this context a stroke corresponds to a part of the line which is drawn to form the respective character (e.g., the letter "A" consists of three strokes). Such approaches are not applicable to recognize characters which are written into the air, that is written virtually by a user performing a three dimensional movement, because the respective three dimensional trajectory cannot be processed by such systems.

A prior art handwriting recognition system supporting such three-dimensional virtual character is described in US patent 7796819, which discloses a method for handwriting recognition that analyzes three-dimensional motion of a user. The suggested method discerns each stroke on the basis of a direction of motion at the beginning portion and end portion of the stroke, and recognizes a character using a combination of the strokes. In the suggested system the writing user has to manually indicate the beginning and end of each stroke to the system by using a respective switch function of the system. This manual operation of the switch prevents the user from continuous and fluent writing.

Other prior art systems provide solutions for the recognition of three-dimensional hand writing using a camera to determine the absolute position of the user's hand for determining the trajectory performed by the user's hand while writing. To determine the absolute position a stationary, fixed camera system, such as for example, the MICROSOFT KINECT sensor system is necessary.

In view of the prior art, there is a need for improved handwriting recognition in the case of virtual three-dimensional hand writing, that is, for writing letters, signs or words into the air. It is desirable to provide a system and method for supporting continuous and fluent writing without a need for complex systems including stationary sensors.

### Summary

Therefore, there is a need to provide decoding systems and methods for improved character and handwriting recognition in the case of virtual three-dimensional hand writing. Virtual in this context is to be understood as writing without a medium (e.g., paper, display, etc.) forcing the writer to write in two dimensions. Instead the writer can, for example, write into the air without limitations to make movements in a third dimension. This technical problem is solved by embodiments of the present invention according to the independent claims. In the context of the following description the term "character" refers to any letter, sign or symbol which can be composed from a sequence of strokes. This includes for example all characters of the American Standard Code for Information Interchange (ASCII) or Unicode but also Japanese, Chinese or other Asian characters as well as other signs like squares, circles or arrows.

In one embodiment, a decoding computer system for handwriting recognition includes an interface component for receiving measurement data from a motion sensor unit. The motion sensor unit is physically coupled with a movable part of a user's body. For example, the motion sensor unit may be attached to the user's hand. It may be part of a any kind of wearable item, for example a glove, a bracelet, a watch or a ring worn by the user. It may also be imprinted onto the skin, injected into the skin, or implanted, or otherwise temporarily or permanently attached to the human body. It may also be part of a device held by the user (e.g., a smartphone, an electronic pen, etc.). Furthermore, the computer system itself may be a part of a device held or worn by the user. That is, the motion sensor unit may be attached to the user's body either temporarily or permanently. The measurement data includes sensor data of at least one sensor of the motion sensor unit. The sensor data may correspond to a second derivation in time of a trajectory of the motion sensor unit. Higher order derivations in time may be used as well in case an appropriate sensor is available. That is, the measurement data may include acceleration data provided by an acceleration sensor which is part of the motion sensor unit. In an alternative embodiment the motion sensor unit may include sensors, such as a gyroscope, a magnetometer or a barometer. In such embodiments, the measurement data may include data regarding the rotation and orientation of the motion sensor unit or the air pressure. For example, the motion sensor may include a gyroscope in addition to or instead of an acceleration sensor in which case the sensor data may correspond to the angular velocity. For example, the motion sensor may further include a barometer in addition to the acceleration sensor and/or the gyroscope. The respective sensor data then further includes the air pressure. A difference in air pressure for two locations of the motion sensor indicates a difference in height for the two sensor locations and can thus be used as a measure for vertical motion. Using a combination of such various sensor measurement data types can improve the accuracy of the handwriting recognition method. Further, such measurement data types provide measures of the relative movement of the motion sensor making a stationary fixed sensor setup obsolete because the suggested handwriting recognition does not depend on absolute location measurement of the motion sensor unit for trajectory determination.

The computer system includes a data storage component for storing technical profiles of primitive motion units wherein the technical profiles include at least a plurality of predefined acceleration profiles. That is, a technical profile of a primitive motion unit in the context of this document is a profile which reflects physical data such as acceleration, orientation, rotation and/or pressure data either as raw data or in a preprocessed format wherein the physical data is associated with performing a three dimensional movement to draw or write a respective character or sign. Thereby, the physical data (e.g., acceleration, angular velocity, air pressure, etc.) characterizes the respective physical movement. In other words, each acceleration profile includes at least acceleration data characterizing a movement associated with a specific portion of a potential trajectory of the motion sensor unit in the context of at least a previous or subsequent portion of the potential trajectory. The context of a movement associated with a specific portion of a potential trajectory is defined by a previous and/or a subsequent portion. The context in which a portion of the potential trajectory is embedded has an impact on the respective technical profile and can be used to differentiate similar portions of different trajectories occurring in different contexts. For example, a context-dependent sequence of technical profiles representing an up-movement and a subsequent down-movement is different in cases where a pause is made or not between the two movements. Therefore, it is advantageous to store context-dependent sequences of profiles because a mere concatenation of basic technical profiles (primitives) does not reflect the actual sensor measurement data in most cases.

The system further includes a decoding component for comparing the received sensor data with the plurality of predefined acceleration profiles to identify a sequence of portions of the trajectory associated with the motion sensor unit. For example, the decoding component can identify a particular character corresponding to the received sensor data if the identified sequence of portions of the trajectory of the motion sensor unit is associated with a predefined (e.g., defined by an expert or derived from available knowledge or automatically learned from training data) context-dependent sequence of portions of a specific potential trajectory representing the character. In other words, each character can be specified by one or more characteristic context-dependent sequences of technical profiles. For example, the decoder can calculate a similarity score, for example by calculating the likelihood of a Hidden Markov Model given the observed sensor signals by using the Viterbi algorithm together with Hidden Markov Models as technical profiles, between the received measurement data and respective predefined context-dependent sequences of technical profiles. The particular character associated with the context-dependent sequence of technical profiles with the highest similarity score is then identified by the system. Furthermore, the decoder can provide a representation of the identified handwritten text, sign or signs to an output device. For example, the text, sign or signs (e.g., a character or text) can be displayed on a display device or printed or it may be converted into an audio signal and conveyed as spoken language. The decoded character or sign may also be used as part of an instruction for controlling a digital device or may be used for manipulating virtual objects. For example, in case the decoded character or sign corresponds to a specific symbol like an arrow or a dash to the right, it may be used to trigger a scrolling function to the right. For example, in case the decoded character corresponds to a push gesture (i.e., moving the hand forward like closing a door) it may be used to trigger select function. A sequence of such symbolic characters in 3D space may be used to manipulate virtual objects.

In one embodiment, the received measurement data may be transformed into a feature space which is characteristic of the respective movement of the motion sensor unit. The goal of this step is to transform the raw data in a way that the data provided to the decoding component contains only relevant information for the handwriting recognition task. Therefore, the transformed measurement data may include less data and information than the original raw sensor data characterizing the movement. For example, the preprocessing component can perform such a feature extraction from the original raw data by using mean and/or variance normalization. The stored technical profiles may characterize the portions of the potential trajectory with a corresponding representation in the feature space. This allows calculating a similarity between the transformed data extracted from the sensor data with corresponding technical profiles representing the respective portions in the feature space.

In one embodiment, a detection component may separate handwriting-related measurement data from other measurement data of the motion sensor unit. Various known data separation methods can be used for this purpose enabling the computer system to recognize sporadic writing and depending on the used method also reduce the processing load for the handwriting recognition decoding. Such an automatic separation/segmentation system can enable an always-on operation mode of the proposed system, that is, the system can continuously run in the background and, therefore, allows accurate handwriting recognition for sporadic and continuous writing.

In one embodiment, a dictionary stores one or more context-dependent technical profile sequences for each identifiable character. Each context-dependent technical profile sequence is representative of a potential trajectory of the motion sensor unit associated with an identifiable character. If the dictionary includes multiple context-dependent technical profile sequences for a particular identifiable character, they can represent multiple different potential trajectories of the motion sensor to write the particular identifiable character. Such identifiable characters may be learned by the system or derived from data in an automatic fashion as described later. As a consequence, the system becomes more robust against varying character size and shape, writing habits, and other user peculiarities. The dictionary may also store context-dependent technical profile sequences for strings or words. Such a (word) context-dependent technical profile sequence represents a potential trajectory of the motion sensor unit associated with a multi-character string. It includes one or more connecting technical profiles representing connecting portions of the potential trajectory between at least a previous character and a subsequent character of the multi-character string. The connecting technical profiles facilitate the handwriting recognition in continuous writing as they represent movements performed by the user which are not part of characters but which may have impact on the resulting context-dependent sequence of technical profiles.

The data storage component may further store a group profile which represents a group of contexts. The group of contexts can be associated with multiple similar context-dependent technical profiles. By grouping such similar context-dependent technical profiles the overall number of technical profiles which need to be stored can be flexibly controlled. That means, if there is enough training data, a high number of context-dependent technical profiles can be used. If there is less training data, more context-dependent technical profiles might be grouped together to reduce the number of parameters that need to be estimated from the training data. In other words, the more context-dependent technical profiles are used, the more training data is necessary. The grouping of contexts allows for flexibly adapting to the amount of available training data. A reduced number of context-dependent technical profiles also allows for example to save memory consumed by the data storage component.

In one embodiment, the computer system may include a language database configured to provide to the decoding component probabilities for character sequences. Such language databases are sometimes also referred to as language models and can be used to limit the search space and to provide guidance to the search which improves the accuracy of the handwriting recognition and speed up the decoding time. In cases where two characters are associated with very similar context-dependent sequences of technical profiles (e.g., in handwriting lower "a" and lower "d" are written by very similar movements) the system may have difficulties in identifying the character merely based on the similarity calculation. However, the language model can provide the information that the character sequence "and" has a higher probability than the character sequence "dnd" since "and" is a frequently occurring English word while "dnd" has no meaning in the English language. This language model probability can then be used to influence the identification of the respective character. Additionally, the language model can provide information about word sequences. For example, the sequence of the words "be my guest" has a higher probability than the sequence "be my quest". Both sequences differ only by the letter "g" and "q", which might be hard to discriminate. The probability for the word sequences can positively influence the identification of the correct characters and words.

In further embodiments, a computer program product when loaded into a memory of the computer system and executed by at least one processor of the computer system causes the computer system to execute the steps of a respective computer implemented method for performing the functions of the computer system.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1A is a simplified block diagram of a computer system for handwriting recognition according to one embodiment of the invention;
FIG. 1B illustrates the spatial dimensions with regards to movements of a motion sensor unit according to an embodiment of the invention;
FIGs. 2A to 2D illustrate elementary portions of potential trajectories of the motion sensor unit according to one embodiment of the invention;
FIGs. 3 to 7 are examples of real acceleration sensor measurement data recorded by an acceleration sensor of the motion sensor unit;
FIG 8 illustrates real sensor measurement data of a triaxial acceleration sensor and a triaxial gyroscope when performing a three-dimensional writing movement according to an embodiment of the invention;
FIG. 9 is a simplified flowchart of a computer implemented method for handwriting recognition according to one embodiment of the invention;
FIG. 10 illustrates a further embodiment of the computer system including a training component for creating technical profiles;
FIG. 11 is a simplified flow chart of a computer implemented method for creating technical profiles.
FIG. 12A shows an example of raw sensor data signals of the motion sensor unit in the three spatial dimensions; and
FIG. 12B shows an example of normalized data after mean and variance normalization of the raw sensor data signals.

### Detailed Description

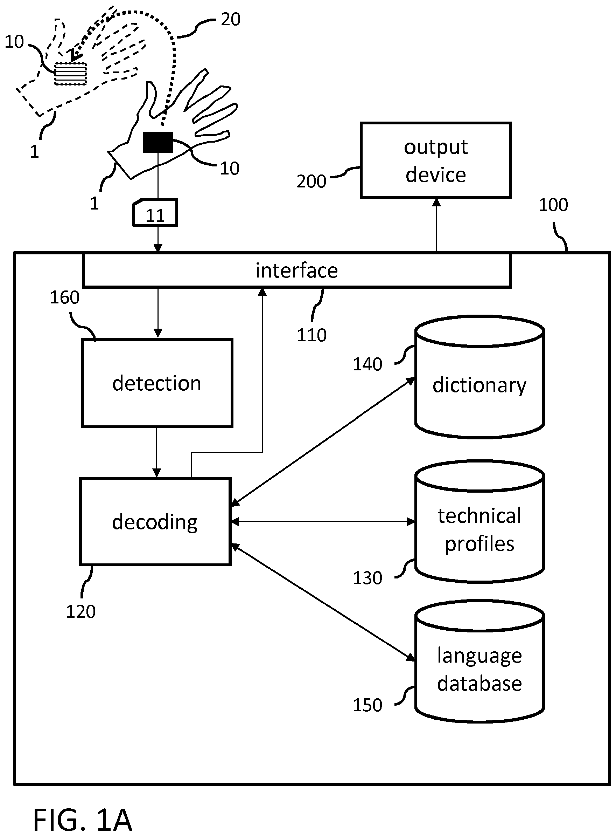

FIG. 1A is a simplified block diagram of a computer system 100 for handwriting recognition according to one embodiment of the invention. The system 100 includes an interface component 110 for receiving measurement data 11 from a motion sensor unit 10. The motion sensor unit can be communicatively coupled with the system 100 by wired or by wireless communication means (e.g., Bluetooth, WLAN, etc.). The motion sensor unit 10 is physically coupled with a movable part (e.g., hand, arm, finger, etc.) of a user's body. It may also be imprinted onto the skin, injected into the skin, or implanted, or otherwise temporarily or permanently attached to the human body. For example, the motion sensor unit may be attached to the user's hand. It may be part of a glove, a watch, a wrist strap, a bracelet or a ring worn by the user. It may also be part of a device held by the user (e.g., a smartphone, an electronic pen, etc.). Any other wearable device with an integrated motion sensor unit such as glasses can be used. Furthermore, the computer system itself may be a part of a device held or worn by the user. That is, the motion sensor unit 10 may be attached to or held by the user's body 1 only for a certain period of time. In the example, the measurement data 11 includes sensor data of an acceleration sensor built into the motion sensor unit 10. The acceleration data measured by the acceleration sensor correspond to the second derivation in time of the trajectory (movement) 20 performed by the motion sensor unit while the user is moving the respective body part 1. In the figure, the user's hand with the attached motion sensor unit 10 is illustrated using bold lines at the beginning of the movement and using dashed lines at the end of the movement. The trajectory 20 performed by the sensor unit 10 is illustrated by a dashed bended arrow.

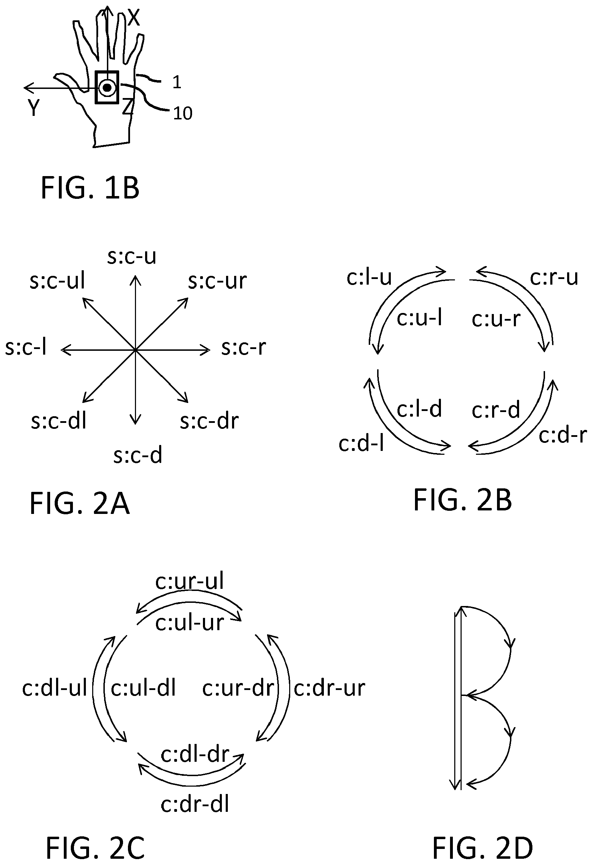

Briefly turning to FIG. 1B, the motion sensor unit may perform movements in all spatial dimensions x, y, and z, wherein the z dimension is illustrated by a point in the origin of the shown Cartesian coordinates system. That is, vectors describing the movement of the trajectory may have vector components in all spatial dimensions.

Returning to FIG. 1A, the motion sensor unit 10 may include further sensors, such as a gyroscope, a magnetometer or a barometer. In such embodiments, the measurement data may further include data regarding the orientation and rotation of the motion sensor unit and the air pressure at the motion sensors position. For example, a gyroscope can measure data regarding the angular rates occurring during the movement. A magnetometer can perform a compass function to provide measurement data about the orientation of the motion sensor unit 10 during the movement. A barometer can provide measurement data of the vertical position of the motion sensor unit.

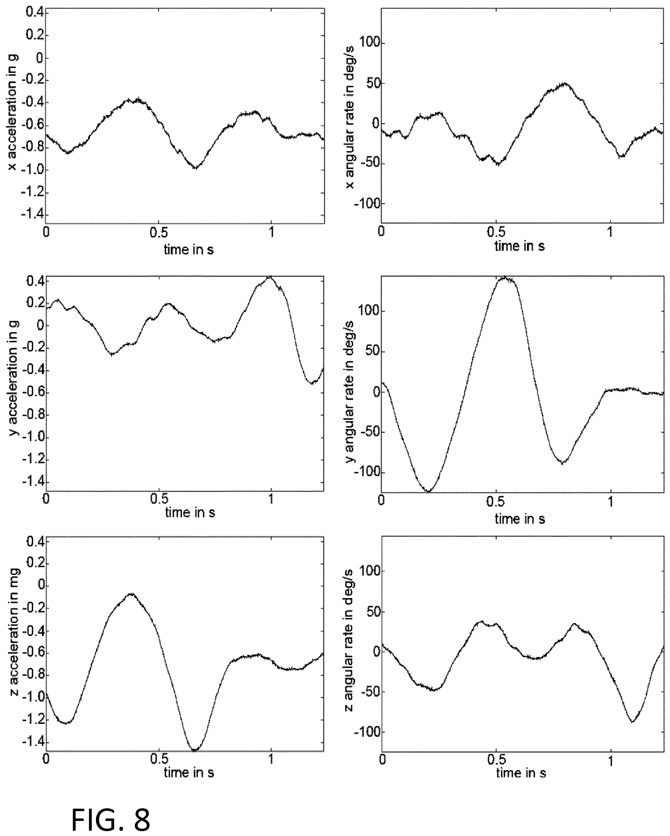

The computer system 100 includes a data storage component 130 for storing technical profiles of characters wherein the technical profiles include at least a plurality of predefined acceleration profiles. Enhancing the technical profiles by orientation profiles, angular rate profiles (rotation profile) and air pressure profiles can improve the overall accuracy of the handwriting recognition system. This will be explained in more detail in FIG. 8. A technical profile of a specific character in the context of this document is a profile which reflects physical parameters, such as acceleration, orientation, rotation and or air pressure data which is associated with performing a three dimensional movement to draw or write the respective character and which characterizes the respective physical movement by said physical parameters. In other words, each acceleration profile includes at least acceleration data characterizing a movement associated with a specific portion of a potential trajectory of the motion sensor unit in the context of at least a previous or subsequent portion of the potential trajectory. The technical profile can be seen as a learned representation of sensor values, either in a raw or a transformed form, over time, e.g. in form of a Hidden Markov Model. For example, the representation can include probability distributions which can be automatically learned from training data by machine learning algorithms. The context of a movement associated with a specific portion of a potential trajectory is defined by a previous and/or a subsequent portion. That is, an acceleration/orientation/rotation/pressure profile of a top-down line portion which is preceded by a left-to-right line portion and followed by another left-to-right line portion is different from an acceleration/orientation/rotation profile of a top-down line portion which is preceded by a bottom-up line portion and followed by a left-to-right line portion. The context in which a portion of the potential trajectory is embedded has an impact on the respective technical profile and can be used to differentiate similar portions of different trajectories occurring in different contexts. This is explained in more detail in FIGs. 2 to 7.

The system 100 further includes a decoding component 120 for comparing the received sensor data 11 with the plurality of predefined technical (e.g., acceleration) profiles 130 to identify a sequence of portions of the trajectory 20 associated with the motion sensor unit 10. FIGs. 2A to 2D explain more details of this aspect. The decoding component 120 can identify a particular character corresponding to the received sensor data if the identified sequence of portions of the trajectory of the motion sensor unit is associated with a predefined context-dependent sequence of portions of a specific potential trajectory representing the character. In other words, each character is defined by one or more characteristic context-dependent sequences of technical profiles.

For example, a dictionary 140 can be used to store such character specific context-dependent sequences of technical profiles. The decoder can compare the received measurement data with the stored context-dependent sequence profiles and outputs/returns the character sequence which is most similar (has highest similarity). A representation of the identified characters / character sequence can be provided to the output device 200. For example, the character can be displayed on a display device (e.g., computer screen, augmented reality glasses, etc.) or printed or it may be converted into an audio signal and conveyed as spoken language. The decoded character may also be used as part of an instruction for controlling a digital device.

The dictionary 140 is configured to define the mapping from characters and words to portions (primitives) and their respective technical profiles. The dictionary 140 can be generated from separate character and word dictionaries. A character dictionary defines the mapping from characters to portions. There can be more than one possibility to write a particular character. Therefore, for one character multiple technical profile variants can be specified/defined in the dictionary. The dictionary can be flexibly expanded by adding new characters, new words, new variants by specifying the sequences of technical profiles accordingly. Table 1 shows an example for multiple variants in the character dictionary for the letter "E". In the example a simplified notation is used to denote portions corresponding to a "down" movement (D), portions corresponding to a "right" movement (R), portions corresponding to a "left" movement (L), portions corresponding to a "down-left" movement (DL) and portions corresponding to an "up-left" movement (UL). Further down in the specification a more granular notation will be introduced.

**Table 1: dictionary variants for the letter "E"**

| character | portion sequence |
|---|---|
| E | D R UL R UL R |
| E | L D R UL R |
| E | D U R DL R DL R |

Table 2 shows an example of a word dictionary entry which is a straight-forward mapping of a word (string) to the respective sequence of individual characters.

**Table 2: dictionary mapping of word to character sequence**

| word | character sequence |
|---|---|
| EEL | EEL |

Table 3 shows by way of example how the generated dictionary can look under the assumption that dictionary variants of "E" are not mixed within one word i.e., that the user is consistent in the way of writing an E within one word, and the character "L" is mapped to the portion sequence "D R". Two consecutive characters may be linked by a connecting portion. However, this connecting portion is not mandatory. The proposed method automatically detects if the connecting portion better fits the given signal data. These portions can be optionally inserted between the strokes of the individual characters and are shown for clarity reasons in brackets in the example dictionary entries of table 3. For example if all characters are written in place, that is, each character is written virtually over the other, a motion to the left is necessary between the characters for the first variant of "EEL" shown in table 3. This is because writing the character "E" typically ends at the right side and writing of both characters "E" and "L" starts at the left side. Thus, a motion symbol for a left motion may be inserted between the characters with respect to the context.

**Table 3: dictionary mapping of word to portion sequence variants (variants marked with numbers)**

| word | portion sequence |
|---|---|
| EEL(1) | D R UL R UL R [L] D R UL R UL R [L] D R |
| EEL(2) | L D R UL R [UL] L D R UL R [UL] D R |
| EEL(3) | D U R DL R DL R [UL] D U R DL R DL R [UL] D R |

In one embodiment, the computer system may include a preprocessing component which transforms the raw sensor measurement data into the feature space. Thereby, the dimensionality and/or the number of samples of the raw data may be changed so that only relevant information regarding the handwriting recognition task is present after the transformation. The transformation may also contain a fusion of different sensors (i.e., multiple sensors of different sensor types). For example, the data from an accelerometer, gyroscope and magnetometer can be fused together to estimate the absolute orientation of the sensor. Several fusion techniques for such an orientation estimation are known in the art, for example a Kalman-Filter, Mahony or Madgewick filter.).

Typical preprocessing steps which can be applied to the received sensor raw data are mean normalization and variance normalization. A mean normalization removes constant offsets in the raw data signal by subtracting the signal mean (and thus setting the mean to zero). For acceleration signals, mean normalization can remove the influence of gravity acceleration to a certain extent. Gravity acceleration is always present on earth and - depending on the hardware implementation - might be measured along the axes of the acceleration sensor depending on its orientation. For example, during handwriting, the orientation of the sensor is not constant but it is not a subject to major changes either. Therefore, removing the constant offset can remove the gravity influence to some extent. If gyroscopes and magnetometers are available, a more precise method for gravity subtraction can be used. There are several methods known in the art (e.g., Kalman filter, Madgwick/Mahony filter) to estimate sensor orientation from the measurement data over time. The estimated orientation can be used to subtract the gravity instead of simply subtracting the signal mean. The estimated orientation might also be used as additional dimensions in the feature space.

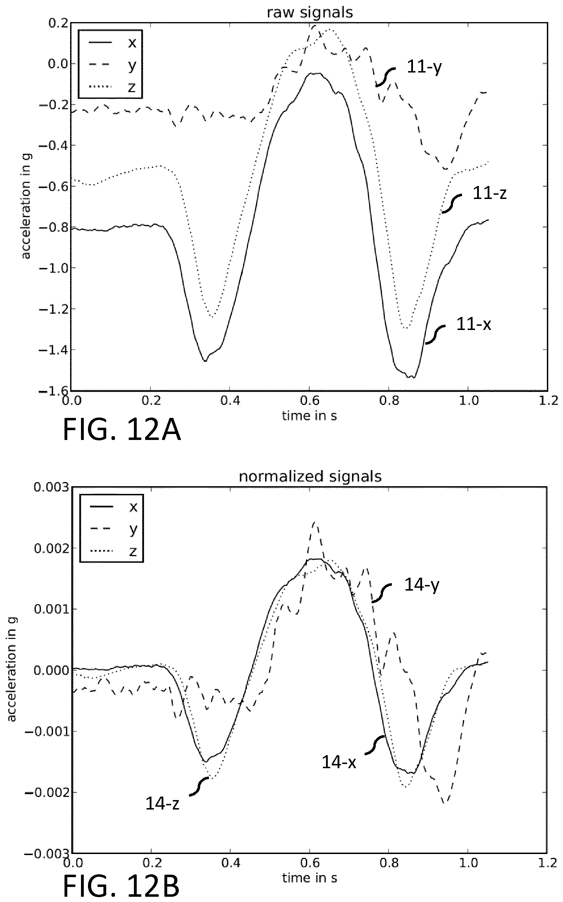

Variance normalization sets the variance of the raw data signal to one and can compensate high or low amplitudes caused by different writing speeds and styles (both, writing speed and style may vary across users). The joint application of mean and variance normalization is commonly denoted as z-normalization. FIGs. 12A and 12B show an example of raw sensor data signals 11-x, 11-y, 11-z (FIG. 12A) in the three spatial dimensions x, y, z (cf. FIG. 12B) and the respective normalized data 14-x, 14-y, 14-z after the z-normalization. For continuous writing, the z-transform can be efficiently computed in real time, i.e., while the corresponding data signals are being received.

Other optional preprocessing steps can include filtering of the received raw sensor data signal. As human motion usually is associated with low frequencies (approx. < 30Hz), the data signals may, for example, be low-pass filtered to eliminate high frequency parts in the signal caused by tremor of the user or sensor noise. Besides the signal normalization the raw signal may be filtered with a moving average filter, which is one option within a wide range of other filters known to the art.

Other transformations commonly used in signal preprocessing and feature extraction for pattern recognition include but are not limited to integration and derivation of the signal, down- or upsampling, signal compression, changing bit resolution, application of a windowing function to compute statistical features like the signal mean within a window or in combination with the short-time Fourier transformation for the extraction of spectral features. Methods like Principal Components Analysis (PCA) or Linear Discriminant Analysis (LDA) or Independent Component Analysis (ICA) are commonly used to reduce the dimensionality of the feature space. Signal approximation like e.g., spline approximation, piecewise linear approximation, symbolic representation or wavelet transform might be used to represent the signal in a compressed form. Information fusion might be used to fuse sensor measurements to generate higher level information, e.g. computation of the sensor orientation from acceleration, gyroscope and magnetometer readings by using a Kalman filter or one of its variants, to name only a few options. The transformation may also contain stacking of subsequent samples over time or n-order derivatives of subsequent samples.

Any sort of combination of methods might be used jointly to transform the original signal (measurement raw data). The output of the preprocessing is the signal transformed into the feature space. The dimensionality and the number of samples might change through the transformation. The transformed samples are usually called feature vectors and thus, the output of the preprocessing is a sequence of feature vectors.

A sequence of characteristic feature vectors of the sensor measurement data signals can be extracted from the received sensor measurement data. For example, a windowing function can be applied to the measurement data or preprocessed data and the average per window is computed for each of the signal dimensions x, y, z. Other approaches include but are not limited to the usage of signal peaks or the zero-crossing rate. The output of such data preprocessing is the transformation of the original signal to the feature space..

The decoding component 120 may use statistical and probabilistic techniques such as Hidden Markov Models (HMM) or Conditional Random Fields (CRF), or Shallow and Deep Neural networks with an appropriate algorithm to solve the HMM or CRF decoding problem (such as appropriate message passing variants of Viterbi beam search with a prefixtree, stack decoder strategies like A*Star or finite state transducers). In case of HMMs are used, the output of the decoding component is an n-best list of the n best hypotheses together with the respective likelihood scores which quantify the likelihood that a hypothesis represents the given signal. The 1-best hypothesis, i.e. the one with the highest likelihood is typically taken as the recognizer output. The likelihood is computed by quantifying the grade of fit between the predefined technical profiles and the observed feature sequence associated with the trajectory 20. Thus, the likelihood can be used as a measure of similarity between the technical profiles and the sensor signals transformed into the feature space. It may also take into account the likelihood of the character and/or word sequence in general. The latter can be computed by integrating the language model into the decoding process (language database) 150. The language model includes probabilities for sequences of characters or words, typically specific to the language and the domain of application. A character language model can return the probability of a character given a fixed number of its predecessors. A word language model returns the probability for a word given a history of words observed so far. This allows exploiting syntactic and semantic properties of a language by e.g. deriving statistical properties from training text via machine learning algorithms, which people skilled in the art of speech and handwriting recognition are familiar with. A language model can be implemented as a statistical n-gram model or a grammar. A grammar may restrict the character sequences that can be recognized, and may allow for greater robustness of the recognition. The influence of the likelihoods of the technical profiles versus the influence of the language model can be adjusted by a weighting factor. In other words, the decoding component may use two different kinds of probability scores, e.g., probability scores that quantify the similarity with motion patterns and probability scores of character or word occurrence in sequences. Details regarding the HMM approach are disclosed by Amma C.; Georgi M.; Schultz T. in "Airwriting: a wearable handwriting recognition system", Personal and Ubiquitous Computing, available online under DOI 10.1007/s00779-013-0637-3.

In one embodiment the computer system further may include a detection component 160 configured to filter the received sensor data so that only sensor data associated with writing motion for a character is provided to the decoding component. Thereby, the system can continuously run in the background and automatically detect when a user writes. This may provide more convenience to the user, as no switch or special gesture has to be manually activated to indicate the beginning and end of writing. In other words, this feature enables the user to permanently wear the system and not have to worry about having to manually / consciously switch the system ON and OFF - it will always run but only recognize characters or words when the user indeed writes. The detection component 160 can segment the incoming measurement data 11 into handwriting and non-handwriting parts. For example, this can be achieved by using a binary classification: the incoming data stream is windowed by applying a sliding window; the individual windows are then classified in handwriting or non-handwriting resulting in a segmentation of the input signal. Details regarding this approach are disclosed by Amma C.; Georgi M.; Schultz T. in "Airwriting: a wearable handwriting recognition system", Personal and Ubiquitous Computing, available online under DOI 10.1007/s00779-013-0637-3.

Another possibility for separating handwriting-related data from other measurement data is to handle the non-handwriting motion by a garbage model within a Hidden-Markov-Model decoder. That is, in addition to the character related technical profiles, a special technical profile for non-handwriting (garbage) motion is created. This technique is described for automatic speech recognition by Wilpon, J.G.; Rabiner, L.; Chin-Hui Lee; Goldman, E.R. in "Automatic recognition of keywords in unconstrained speech using hidden Markov models," Acoustics, Speech and Signal Processing, IEEE Transactions on , vol.38, no.11, pp.1870,1878, Nov 1990. A person skilled in the art can apply this approach in the context of the present invention.

Another possibility is to use a threshold based approach as proposed and described by Hyeon-Kyu Lee; Kim, J.H in "An HMM-based threshold model approach for gesture recognition," Pattern Analysis and Machine Intelligence, IEEE Transactions on , vol.21, no.10, pp.961,973, Oct 1999.

FIGs. 2A to 2D illustrate examples of elementary trajectory portions (primitives) which can be composed into sequences of portions representing characters. Other primitives may be used instead; especially the given primitives can be expanded to 3D space including motion directed to the user or from the user away. This is left out for clarity of the illustration in the figures. The labels used in the examples can be read in the following way. Left to the colon the line type is encoded. "s" represents a straight line type and "c" represents a circular line type. A circular line type refers to a circular arc with a central angle of 90 degrees. Right to the colon the start and end of the respective portion is encoded in a "from-to" format. Possible codes are "c" for center, "u" for up, "d" for down, "r" for right, and "I" for left. Persons of skill in the art can distinguish trajectories with a different granularity. Some of the examples in the figures will now be explicitly described.

In FIG. 2A, s:c-I stands for a straight line starting at the center and ending at the left. s:c-dr stands for a straight line starting at the center and ending down-right.

In FIG. 2B, c:l-u stands for a circular line starting at the left and going up (which implies going to the right). c:r-d stands for a circular line starting at the right and going down (which implies going to the left.

In FIG. 2C, c:dl-ul stands for a circular line starting at down-left and going to up-left. c:dl-dr stands for a circular line starting down-left and going-down right.

All other codes can be decoded according to this scheme. This scheme can be used to create models of characters as sequences of respective portions. Following this scheme, for example, the sequence of portions describing the movements performed to write the letter B in FIG. 2D can be described as (portions as separated by commas for better readability): s:c-d, s:c-u, c:u-r, c:r-d, c:u-r, c:r-d.

For each portion a respective technical profile can be created. Such technical profile is dependent on the context of the portion, because the physical parameters characterizing the portion depend on the previous and subsequent portions. The representation of characters by such technical profiles is very flexible, because it does not require the modeling of complete character models. Rather, any arbitrary character or symbol can be built from such basic context-dependent or context aware primitives, and as a consequence can also be recognized by the decoding component of the system. Therefore, new symbols, characters, and words can be defined and integrated on the fly without the need to change, modify, or retrain the existing models and systems.

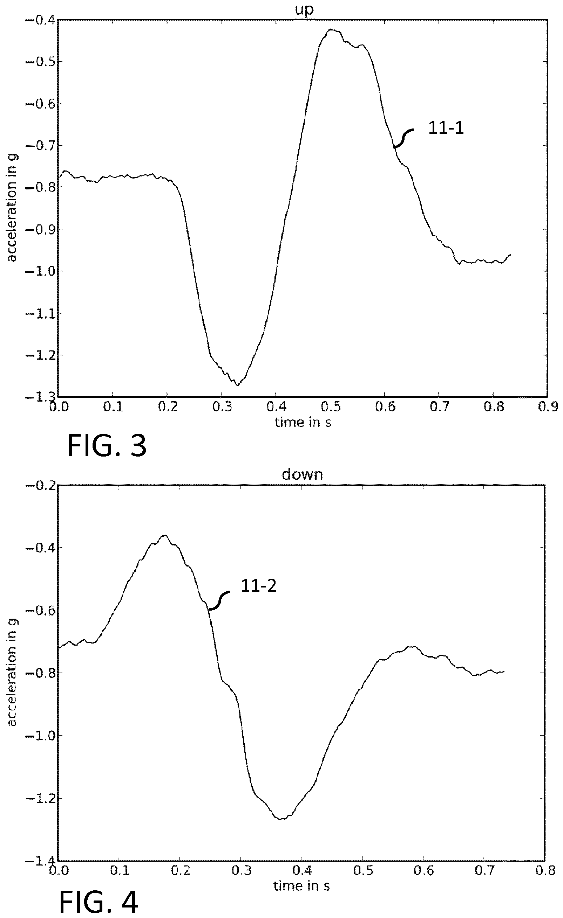

FIGs. 3 to 7 illustrate the context dependency of the technical profiles related to characteristic portions of characters or symbols. The figures show real measurement data (signal patterns) received from an acceleration sensor. However, they clearly illustrate the physical effects caused by the context dependency of the portions which is considered when creating the respective technical profiles.

The signal patterns for individual portions vary depending on the preceding and or subsequent portions. For example, it can make a great difference for context-dependent sequences of technical profiles if two consecutive movements (portions of the trajectory) are performed with a pause in between or without a pause.

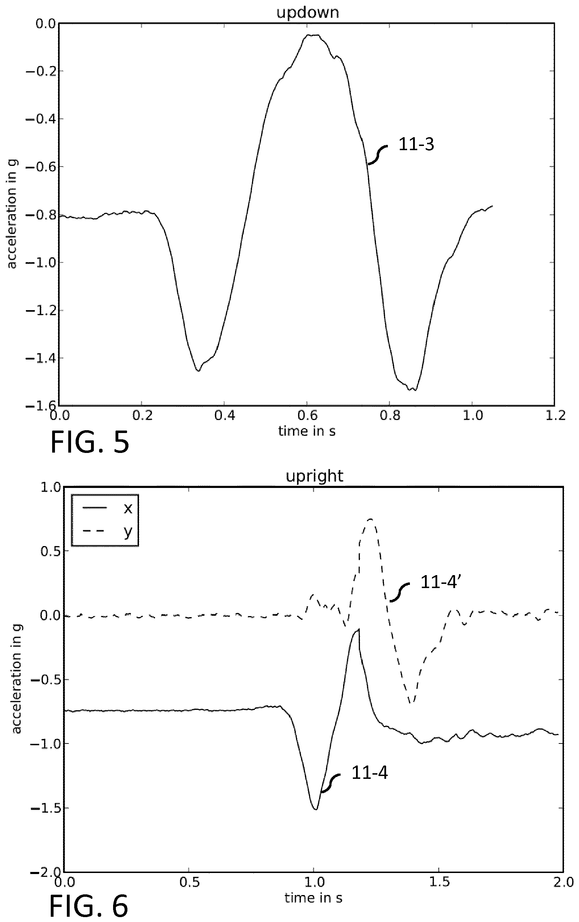

FIG. 3 shows the pattern 11-1 for an up-movement (portion "s:c-u"). FIG. 4 shows the pattern 11-2 for a down -movement (portion "s:c-d"). When concatenating the patterns 11-1, 11-2 the concatenated result pattern clearly differs from the pattern 11-3 for the portions "s:c-u" and "s:c-d" (cf. FIG. 5, labeled "updown") when executed without a pause between the two portions. In other words, the context-dependent technical profiles for an up motion or a down motion vary respectively dependent on the previously or subsequently performed motion. This is due to the fact that the direction of the acceleration at the end of the "up" portion is the same as the acceleration in the beginning of the "down" portion. As there is no pause between the portions, the acceleration value does not become zero between the two consecutive portions. As a consequence, it is not sufficient to store patterns (technical profiles) for each of the portions in the storage component 130 (cf. FIG. 1) because technical profiles for sequentially executed portions without pauses are not equal to the mere concatenation of the technical profiles of the individual portions executed with a pause at the beginning and end of the respective portion. As a consequence, the storage component 130 also stores context-dependent technical profiles as shown by the example of FIG. 5.

Another example is given in FIG. 6 for the portion sequence of "up" (s:c-u) and "right" (s:c-r). As the "right" portion does not contain any vertical motion, the pattern 11-4 in the x-dimension (cf. FIG. 1B) for the "up" portion is very similar to the pattern 11-1 shown in FIG. 3. The pattern 11-4' illustrates the acceleration data in the y-dimension, which in this case corresponds to a vertical motion to the "right". This example illustrates that the "right" portion has no impact on the "up" portion in this case. The example shows that, it may be advantageous to store different context-dependent technical profiles for different combinations of preceding and subsequent portions.

The following naming convention will be used for denoting a portion in the context of the preceding and succeeding (subsequent) portions: p(pp|sp) where p is the portion, pp denotes the preceding portion (preceding context) and sp denotes the subsequent portion (succeeding context).

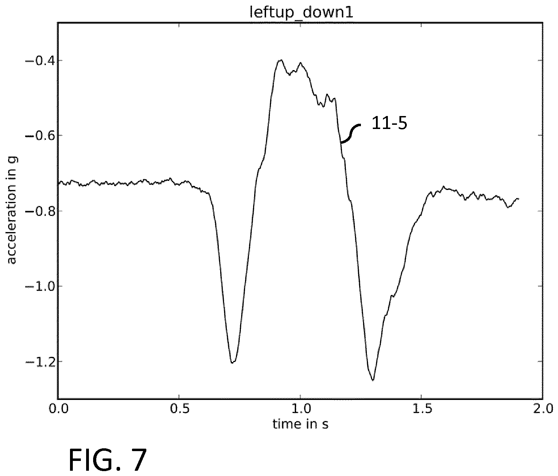

For example, technical profiles can be stored for all possible combinations of preceding and succeeding contexts. Alternatively, technical profiles can be created and stored for groups of contexts. For example, only one technical acceleration profile for the "down" portion in the context of the preceding portions of "leftup" and "up" can be created since the pattern of "down" is almost the same for both preceding contexts (cf., FIG. 7, pattern 11-5 "leftup" followed by "down" and FIG. 5, pattern 11-3 for "up" followed by "down"). This allows for flexibly controlling the amount of technical profiles which have to be created. That means, if there is enough training data, a high number of context-dependent technical profiles can be used. If there is less training data, more context-dependent technical profiles might be grouped together to reduce the number of parameters that need to be estimated from the training data. In other words, the more context-dependent technical profiles are used, the more training data is necessary. The grouping of contexts allows for flexibly adapting to the amount of available training data. A reduced number of context-dependent technical profiles also allow, for example, reducing the memory consumption of the storage component 130 (cf. FIG. 1). The groups of contexts can be defined by experts or learned from data by clustering technical profiles based on similarity with a clustering algorithm (e.g., k-means, k-medians, Neural Gas) and an appropriate distance or similarity measure (e.g., Euclidian distance, dynamic time warping, Kullback-Leibler divergence).

FIG. 8 illustrates examples of acceleration and rotation (angular rates) sensor data. The figure relates to the example of writing the character "A"". The respective sequence of portions related to the character strokes can be described as: s:c-ur, s:c-dr, s:c-ul, s:c-r.

As mentioned earlier, the accuracy of handwriting recognition may be improved by complementing acceleration sensor data with further sensor data, such as rotation and/or orientation sensor data. All three types of sensor data can be used for handwriting recognition based on relative sensor data. In other words, acceleration sensor data, orientation sensor data and rotation sensor data can be used to determine a match with the predefined technical profiles stored in the system without a need to know the absolute position in space of the motion sensor unit. There is therefore no need to have a complex static system with stationary camera sensors as suggested in the prior art. Accurate handwriting recognition according to embodiments of the present invention only relies on data which are measured by sensors independent of any absolute spatial coordinates. The figure shows example signals recorded by a motion sensor unit 10 (cf. FIG. 1) while a user was writing the letter "A" into the air. In this example, the motion sensor unit includes a triaxial accelerometer and a triaxial gyroscope. Each row of graphs shows the acceleration measurement data for one spatial dimension on the left and the angular rate measurement data for the same dimension on the right. Due to the alignment of the motion sensor unit with the user's hand, vertical and horizontal motion is partly observable in all three dimensions (x, y, z in the first, second, third row, respectively). However the main vertical motion can primarily be observed along the z and x axis, the main horizontal motion can primarily be observed along the y axis. Experimental trials have shown that the accuracy of handwriting recognition according to the inventive concept is improved by combining measurement data reflecting acceleration, rotation and orientation data received from respective sensors of the motion sensor unit. For example, it has been shown by Amma C., Gehrig D., and Schultz T. in "Airwriting recognition using wearable motion sensors", Augmented Human Conference, 2010, Megeve, France, that the information provided by gyroscopes increases the recognition performance compared to a system using only accelerometers.

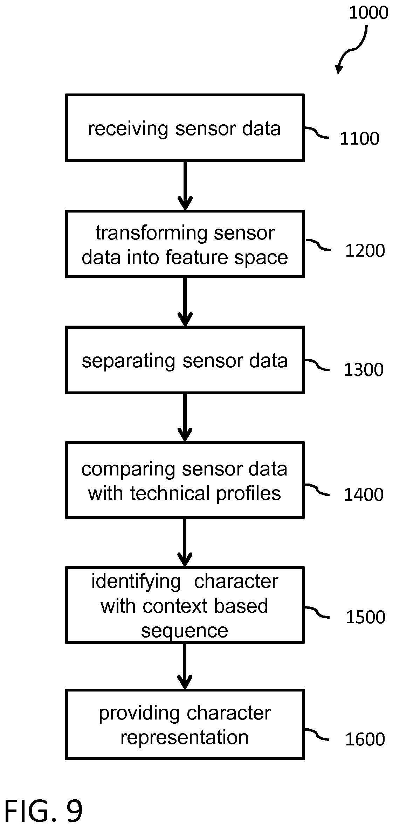

FIG. 9 is a simplified flow chart of a computer implemented method 1000 for handwriting recognition according to one embodiment of the invention. The method can be executed by the various components of the computer system 100 (cf. FIG. 1). Transforming 1200 sensor data into the feature space and separating sensor data 1300 can be optional steps which may not be present in the basic embodiment.

The computer system receives 1100 sensor measurement data from a motion sensor unit physically coupled with a movable part of a user's body. The sensor measurement data includes a second derivation in time of a trajectory of the motion sensor unit. The trajectory includes a sequence of portions corresponding to a movement performed by the user. For example, the user moves his or her hand with the attached motion sensor unit and the motion sensor unit may record measurement data regarding the acceleration, rotation or orientation of the motion sensor unit over time. Such data may then be received by the computer system.

The computer system can compare 1400 the received sensor measurement data with a plurality of sequences of technical profiles. Such technical profiles at least include a plurality of predefined acceleration profiles. In alternative embodiments the technical profiles may further include orientation, rotation and/or pressure profiles. Each acceleration profile includes information on the distribution of acceleration data characterizing a movement associated with a specific portion of a potential trajectory of the motion sensor unit in the context of at least a previous or subsequent portion of the potential trajectory. Thereby, each technical profile may include a stochastic description of the evolvement of the measurements over time, where the measurement data characterize the movement associated with the respective specific portion of the potential trajectory of the motion sensor unit. This allows that there is no need for an exact matching of the measurement data and the respective technical profiles. A similarity within a predefined similarity range can be sufficient to identify the respective technical profiles. Possible sequences of context dependent technical profiles are defined in the dictionary. The received sensor data or its transformation to the feature space is aligned with the possible sequences of technical profiles (e.g. characters or words). A similarity score is computed for the possible sequences of technical profiles and the received sensor data or its transformation to the feature space. To align the data with a sequence of technical profiles, the technical profiles are concatenated according to the dictionary to form new virtual technical profiles representing sequences of the original technical profiles. The individual technical profiles in the sequence are chosen according to their context, i.e., according to the previous and subsequent technical profiles. The sequence of technical profiles with the highest similarity score is selected as output.

If the motion sensor unit also provides rotation and/or orientation data, the technical profiles further may include respective predefined rotation data, orientation data and or pressure data associated with the specific portions of the potential trajectory of the motion sensor unit in the context of at least a previous or subsequent portion of the potential trajectory. This can increase the overall accuracy of the handwriting recognition method. The disclosed four sensor measurement data types (acceleration, orientation, rotation, air pressure) are suitable to measure the relative movements of the motion sensor unit in all spatial dimensions over time without a need to have a complex stationary sensor in place because the disclosed handwriting recognition method is not dependent on any absolute position values for the determination of the trajectory of the motion sensor unit.

In one embodiment, the system can transform 1200 the received sensor data into the feature space to compare the transformed data with the representations in the technical profiles. The representations (i.e,, the transformed motion sensor measurement data) are representative of the acceleration data, rotation data, orientation data and/or pressure data of the motion sensor data. In other words, the measurement data is transformed to the feature space which might have a different dimensionality and a different number of samples per time unit. The samples in the feature space are called feature vectors and therefore, the transformation results in a sequence of feature vectors. Such a sequence of feature vectors extracted from the received sensor data can then be compared to a corresponding technical profile. Thereby, each technical profile may include a stochastic description of the evolvement of each feature over time, where the features characterize the movement associated with the respective specific portion of the potential trajectory of the motion sensor unit. This allows that there is no need for an exact matching of the feature vectors derived from the measurement data and the respective technical profiles. A similarity within a predefined similarity range can be sufficient to identify the respective technical profiles. The use of preprocessed features instead of measurement raw data may allow reducing the amount of data to be stored and processed by the system and may allow for a better generalization of the technical profiles as well as for a higher accuracy of the handwriting recognition method.

In one embodiment, upon receipt of the sensor measurement data, the system can separate 1300 handwriting-related measurement data from other measurement data of the motion sensor unit. This preprocessing step allows for continuous operation of the system in the background without the need to explicitly switching it on or off. It further helps to reduce the amount of data which needs to be processed by the comparing step and, therefore, contributes to improve the performance of the handwriting recognition method 1000.

The system can then identify 1500 a particular sign, character or word corresponding to the received sensor data, either on the basis of the raw measurement data or by using the representation of the data transformed to the feature space representing the motion characteristics. If the identified sequence of portions of the trajectory is associated with a predefined context-dependent sequence of portions of a specific potential trajectory representing the particular sign, character or word, the particular sign, character or word is identified.

Finally, the system provides 1600 a representation of the identified sign, character or word to an output device.

A person skilled in the art will appreciate that in the description of the computer system further optional method steps are disclosed which can be combined with the computer implemented method 1000, such as for example the use of a language model.

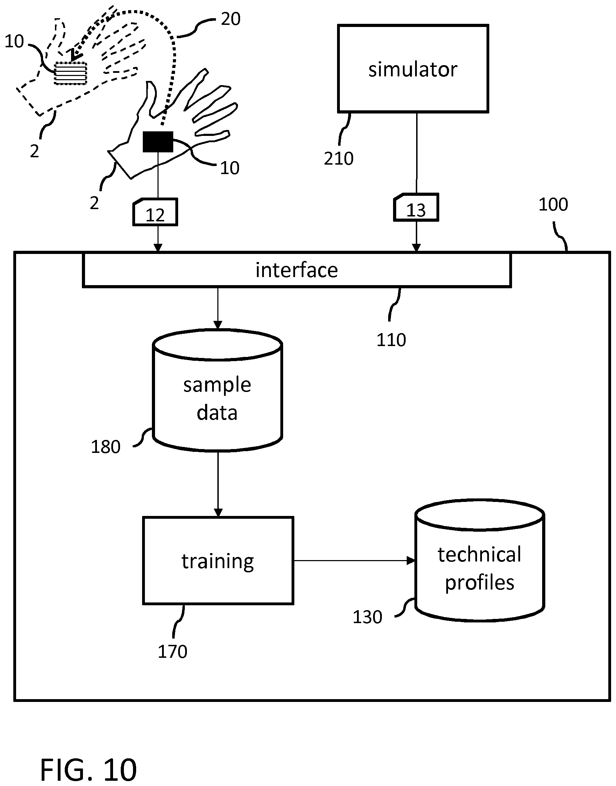

FIG. 10 illustrates a further embodiment of the computer system 100 including a training component 170 configured create the technical profiles 130 based on sensor sample data 12 received from the motion sensor unit 10. This may involve recording sensor data 12 from a number of different users 2 while they perform sample handwriting movements. The recording may obey a predefined recording protocol, which allows the system 100, after the recording of the respective sensor sample data 12, to know which parts of the recorded signals belong to which characters, words or sentences. In other words, users are prompted to write, for example, a single "A" and the corresponding data is recorded. This is repeated for other characters or sequences of characters unless data for all context-dependent technical profiles is collected. The recorded sensor sample data may be complemented or even be replaced by synthetic training data 13 wherein synthetic training data may correspond to signals which are acquired from a simulator 210 simulating a real user using the system 100. Although the simulator 210 in the figure is not a part of the computer system 100 it may also be implemented within the computer system 100. The acquired training samples 12, 13 may be stored in a sample database 180.

The training sample data 12, 13 can include data from different users and multiple instances of the recorded characters. Multiple instances of a recorded character can also be based on different writing habits of different users with regards to different sequences of strokes being used for writing the same character. In general, typically a small variety is observed in the way one and the same person writes certain characters; whereas a larger variety is observed in the way different people write a specific character. The training component 170 is configured to identify the technical profiles that represent this variety in the movement of the users reflected by the resulting acceleration, rotation, orientation and/or pressure sensor signals. This can be achieved by using statistical and/or probabilistic methods like e.g. Hidden Markov Models (HMMs). The training component may use one of the known training methods for HMMs like e.g. the Baum-Welch algorithm, Viterbi training or discriminative training.

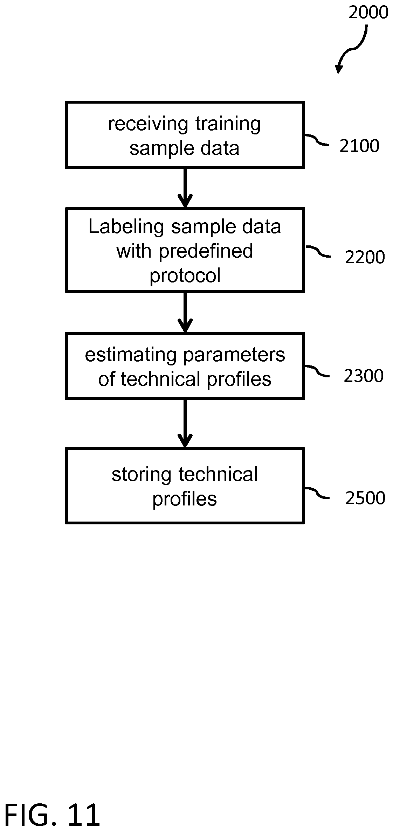

FIG. 11 is a simplified flow chart of a computer implemented method 2000 for creating technical profiles. Method 2000 may precede method 1000 (cf. FIG. 9) to create the technical profiles used for handwriting recognition.

To create technical profiles the system receives 2100 training sample data. As explained with FIG. 10, training sample data may be generated by a motion sensor unit being used by one or more users and repeating specific writing movements. Another possibility to generate such sample training data is via a simulator which simulates movements of multiple users and/or writing styles and writing variation by varying simulation parameters. The training sample data are stored in a database for further processing.

The received training sample data can be labeled 2200 according to a predefined protocol. The predefined protocol allows the system to identify which sequence of movements (trajectory) belongs to which character or string.

In the next step the training component 170 (cf. FIG. 10) generates technical profiles 130 from the stored training samples using, for example, Hidden Markov Models (HMMs). The goal of the training is to estimate 2300 the parameters of the technical profiles in order to maximize an objective function, which quantifies the degree of fit of the technical profile with the training sample data 12, 13 (cf. FIG. 10). The result of the training component therefore is a set of technical profiles which at least represent a local maximum of the objective function. The training component may use one of the known training methods for HMMs like e.g. the Baum-Welch algorithm, Viterbi training or discriminative training. These training algorithms allow for training even in the case, when the exact boundaries of the context dependent portions of the trajectory are not known but only, for example, the character, i.e. the sequence of context dependent portions. If, for example, the training sample contains the sensor data of an "A", which includes four strokes, i.e. four context dependent technical profiles, the parameters of these four technical profiles can be trained without knowing the boundaries of the strokes in the measurement data. For estimating 2300 the parameters, before the actual training, the HMM parameters are initialized with a flat start procedure. If linear HMMs are used, this may be done by partitioning the sample data or its transformation to the feature space, respectively, into as many partitions as there are states in the HMM. The emission probability distribution of the state is then estimated based on the sample data in the partition belonging to this state. If for example Gaussian mixture models are used to model the probability distribution, this can be done by estimating the mean and covariances by k-means clustering. If, for example, neural networks are used, this could be done by training the network on the sample data using the back-propagation algorithm. All methods described for the training are known to a person skilled in the art of handwriting or speech recognition.

The training component may also create one technical profile for a group of contexts. That is, the technical profile is the same for a given set of preceding or succeeding contexts. For example, this may be useful if a portion of a trajectory is the same for a number of preceding and succeeding contexts. By grouping such similar context-dependent technical profiles the overall number of technical profiles which need to be stored can be reduced to save memory consumed by the data storage component. Additionally, the number of parameters that need to be estimated during training can be reduced, thus improving the system performance. Such groups can be defined by experts or automatically by the system by first creating technical profiles for all possible combinations of contexts and afterwards subsume all contexts, for which the technical profiles are similar according to a similarity measure for technical profiles. This may be done by a clustering algorithm, e.g. k-means, or based on a pre-defined threshold for the maximal similarity.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

## Claims

1. A computer system (100) for handwriting recognition, comprising:
an interface component (110) configured to receive measurement data (11) from a motion sensor unit (10), the motion sensor unit (10) being physically coupled with a movable part (1) of a user's body, wherein the measurement data (11) includes sensor data of a sensor of the motion sensor unit (10), the sensor data comprising at least acceleration data of a trajectory (20);
a data storage component (130) configured to store a plurality of predefined technical profiles of primitive motion units, each predefined technical profile including acceleration data associated with a trajectory portion of a potential trajectory of the motion sensor unit (10), wherein a character model is defined by a context-dependent sequence of two or more technical profiles, each technical profile characterizing a corresponding primitive motion unit as a specific portion of the potential trajectory, and wherein the plurality of technical profiles includes, for two consecutive trajectory portions, first technical profiles for corresponding primitive motions performed with a pause and second technical profiles for corresponding primitive motions performed without a pause, the first technical profiles being different from the second technical profiles;
a decoding component (120) configured
to compare the received sensor data (11) with the plurality of predefined technical profiles to identify a sequence of portions of the trajectory (20),
to identify a particular character corresponding to the received sensor data (11) by computing a similarity score between the received measurement data (11) and respective predefined context-dependent sequences of predefined technical profiles of character models wherein the particular character is associated with the context-dependent sequence of technical profiles with the highest similarity score, and
to provide a representation of the identified character to an output device (200).

2. The computer system (100) of claim 1, wherein the measurement data includes further sensor data of a further sensor of the motion sensor unit (10), the further sensor data corresponding to orientation data, rotation data and/or air pressure data of the motion sensor unit (10), and wherein the technical profiles further include respective predefined orientation data and/or rotation data associated with the specific portions of the potential trajectory of the motion sensor unit (10) in the context of at least a previous or subsequent portion of the potential trajectory.

3. The computer system (100) of any one of the previous claims, wherein each technical profile includes a representation of the sensor data in a feature space, the representation being characteristic of a respective specific portion of the potential trajectory of the motion sensor unit (10), and wherein the decoding component (120) is configured to transform the received sensor data (11) into the feature space to compare the transformed data with the representation in the technical profile.

4. The computer system (100) of any one of the previous claims, further comprising a detection component configured to separate handwriting-related measurement data from other measurement data of the motion sensor unit.

5. The computer system (100) of any one of the previous claims, further comprising a dictionary (140) configured to store one or more context-dependent technical profile sequences for each identifiable character wherein each context-dependent technical profile sequence is representative of a potential trajectory of the motion sensor unit associated with an identifiable character.

6. The computer system (100) of claim 5, wherein multiple context-dependent technical profile sequences for a specific identifiable character represent multiple different potential trajectories of the motion sensor to write the specific identifiable character.

7. The computer system (100) of claim 5 or 6, wherein the dictionary (140) is further configured to store further context-dependent technical profile sequences wherein each further context-dependent technical profile sequence is representative of a potential trajectory of the motion sensor unit associated with a multi-character string and includes one or more connecting technical profiles representing connecting portions of the potential trajectory between at least a previous character and a subsequent character of the multi-character string.

8. The computer system (100) of any one of the previous claims, wherein the data storage component (130) is further configured to store a group profile which represents a group of contexts, the group of contexts being associated with similar context-dependent sequences of technical profiles.

9. The computer system (100) of any one of the previous claims, further comprising a language database (150) configured to provide to the decoding component (120) a probability for specific sequences of characters.

10. A computer implemented method (1000) for handwriting recognition, comprising:
receiving (1100), from a motion sensor unit (10) physically coupled with a movable part (1) of a user's body, sensor measurement data (11) comprising at least acceleration data of a trajectory (20);
comparing (1400) the sensor measurement data (11) with a plurality of predefined technical profiles of primitive motion units, each predefined technical profile including acceleration data associated with a trajectory portion of a potential trajectory of the motion sensor unit (10), wherein a character model is defined by a context-dependent sequence of two or more technical profiles, each technical profile characterizing a corresponding primitive motion unit as a specific portion of the potential trajectory, and wherein the plurality of technical profiles includes, for two consecutive trajectory portions, first technical profiles for corresponding primitive motions performed with a pause and second technical profiles for corresponding primitive motions performed without a pause, the first technical profiles being different from the second technical profiles;
identifying (1500) a particular character corresponding to the received sensor data (11)by computing a similarity score between the received measurement data (11) and respective predefined context-dependent sequences of predefined technical profiles of character models wherein the particular character is associated with the context-dependent sequence of technical profiles with the highest similarity score; and
providing (1600) a representation of the identified character to an output device (200).

11. The computer implemented method (1000) of claim 10, further comprising:
upon receipt of the sensor measurement data, separating (1300) handwriting-related measurement data from other measurement data of the motion sensor unit (10).

12. The computer implemented method (1000) of claim 10 or 11, wherein the measurement data includes further sensor data of a further sensor of the motion sensor unit (10), the further sensor data corresponding to orientation data, rotation data and/or air pressure data of the motion sensor unit (10), and wherein the technical profiles further include respective predefined orientation data, rotation data and/or pressure data associated with the specific portions of the potential trajectory of the motion sensor unit (10) in the context of at least a previous or subsequent portion of the potential trajectory.

13. The computer implemented method (1000) of any one of the claims 10 to 12, wherein each technical profile includes a representation of the sensor data in a feature space, the representation being characteristic of a respective specific portion of the potential trajectory of the motion sensor unit (10), further comprising:
transforming (1200) the received sensor data (11) into the feature space to compare the transformed data with the representations in the technical profiles.

14. The computer implemented method (1000) of any one of the claims 10 to 13, further comprising prior to the receiving sensor measurement data step (1100):
receiving (2100) training sample data (12, 13) representing characteristic acceleration data of a trajectory of the motion sensor unit (10);
labeling (2200) the training sample data (12, 13) according to a predefined protocol wherein the predefined protocol allows to associate the received training sample data with a corresponding character;
estimating (2300) parameters of technical profiles according to best fit with training data; and
storing (2500) the technical profiles in a data storage component (130).

15. A computer program product that when loaded into a memory of a computing device and executed by at least one processor of the computing device executes the steps of the computer implemented method according to any one of the claims 10 to 14.

## Patentansprüche

1. Computersystem (100) zur Handschrifterkennung, umfassend:
eine Schnittstellenkomponente (110), die konfiguriert ist, um Messdaten (11) von einer Bewegungssensoreinheit (10) zu empfangen, wobei die Bewegungssensoreinheit (10) physisch mit einem beweglichen Teil (1) des Körpers eines Benutzers verbunden ist, wobei die Messdaten (11) Sensordaten eines Sensors der Bewegungssensoreinheit (10) beinhalten, wobei die Sensordaten mindestens Beschleunigungsdaten einer Trajektorie (20) umfassen;
eine Datenspeicherkomponente (130), die konfiguriert ist, um eine Vielzahl von vordefinierten technischen Profilen von primitiven Bewegungseinheiten zu speichern, wobei jedes vordefinierte technische Profil Beschleunigungsdaten beinhaltet, die mit einem Trajektorieabschnitt einer potentiellen Trajektorie der Bewegungssensoreinheit (10) verbunden sind, wobei ein Zeichenmodell durch eine kontextabhängige Sequenz aus zwei oder mehr technischen Profilen definiert ist, wobei jedes technische Profil eine entsprechende primitive Bewegungseinheit als einen spezifischen Abschnitt der potentiellen Trajektorie kennzeichnet, und wobei die Vielzahl von technischen Profilen für zwei konsekutive Trajektorieabschnitte erste technische Profile für entsprechende primitive Bewegungen, die mit einer Pause durchgeführt werden, und zweite technische Profile für entsprechende primitive Bewegungen, die ohne Pause durchgeführt werden, beinhaltet, wobei sich die ersten technischen Profile von den zweiten technischen Profilen unterscheiden;
eine Entschlüsselungskomponente (120), die konfiguriert ist,
um die empfangenen Sensordaten (11) mit der Vielzahl von vordefinierten technischen Profilen zu vergleichen, um eine Sequenz aus Abschnitten der Trajektorie (20) zu identifizieren,
um ein bestimmtes Zeichen zu identifizieren, das den empfangenen Sensordaten (11) entspricht, indem ein Ähnlichkeitsergebnis zwischen den empfangenen Messdaten (11) und jeweiligen vordefinierten kontextabhängigen Sequenzen aus vordefinierten technischen Profilen von Zeichenmodellen berechnet wird, wobei das bestimmte Zeichen mit der kontextabhängigen Sequenz aus technischen Profilen mit dem höchsten Ähnlichkeitsergebnis verbunden ist, und
um einer Ausgabevorrichtung (200) eine Repräsentation des identifizierten Zeichens bereitzustellen.

2. Computersystem (100) nach Anspruch 1, wobei die Messdaten ferner Sensordaten eines weiteren Sensors der Bewegungssensoreinheit (10) beinhalten, wobei die weiteren Sensordaten Ausrichtungsdaten, Rotationsdaten und/oder Luftdruckdaten der Bewegungssensoreinheit (10) entsprechen, und wobei die technischen Profile ferner jeweilige vordefinierte Ausrichtungsdaten und/oder Rotationsdaten beinhalten, die mit den spezifischen Abschnitten der potentiellen Trajektorie der Bewegungssensoreinheit (10) in dem Kontext mindestens eines vorherigen oder folgenden Abschnitts der potentiellen Trajektorie verbunden sind.

3. Computersystem (100) nach einem der vorhergehenden Ansprüche, wobei jedes technische Profil eine Repräsentation der Sensordaten in einem Merkmalsraum beinhaltet, wobei die Repräsentation charakteristisch für einen jeweiligen spezifischen Abschnitt der potentiellen Trajektorie der Bewegungssensoreinheit (10) ist, und wobei die Entschlüsselungskomponente (120) konfiguriert ist, um die empfangenen Sensordaten (11) in den Merkmalsraum zu transformieren, um die transformierten Daten mit der Repräsentation in dem technischen Profil zu vergleichen.

4. Computersystem (100) nach einem der vorhergehenden Ansprüche, ferner umfassend eine Detektionskomponente, die konfiguriert ist, um auf Handschrift bezogene Messdaten von anderen Messdaten der Bewegungssensoreinheit zu trennen.

5. Computersystem (100) nach einem der vorhergehenden Ansprüche, ferner umfassend ein Verzeichnis (140), das konfiguriert ist, um eine oder mehrere kontextabhängige Sequenzen aus technischen Profilen für jedes identifizierbare Zeichen zu speichern, wobei jede kontextabhängige Sequenz aus technischen Profilen eine potentielle Trajektorie der Bewegungssensoreinheit, die mit einem identifizierbaren Zeichen verbunden ist, repräsentiert.

6. Computersystem (100) nach Anspruch 5, wobei mehrere kontextabhängige Sequenzen aus technischen Profilen für ein spezifisches identifizierbares Zeichen mehrere verschiedene potentielle Trajektorien des Bewegungssensors repräsentieren, um das spezifische identifizierbare Zeichen zu schreiben.

7. Computersystem (100) nach Anspruch 5 oder 6, wobei das Verzeichnis (140) ferner konfiguriert ist, um weitere kontextabhängige Sequenzen aus technischen Profilen zu speichern, wobei jede weitere kontextabhängige Sequenz aus technischen Profilen eine potentielle Trajektorie der Bewegungssensoreinheit repräsentiert, die mit einem Multi-Zeichen-Strang verbunden ist, und ein oder mehrere verbindende technische Profile beinhaltet, die verbindende Abschnitte der potentiellen Trajektorie zwischen mindestens einem vorherigen Zeichen und einem folgenden Zeichen des Multi-Zeichen-Strangs repräsentieren.

8. Computersystem (100) nach einem der vorhergehenden Ansprüche, wobei die Datenspeicherkomponente (130) ferner konfiguriert ist, um ein Gruppenprofil zu speichern, das eine Gruppe aus Kontexten repräsentiert, wobei die Gruppe aus Kontexten mit ähnlichen kontextabhängigen Sequenzen aus technischen Profilen verbunden ist.

9. Computersystem (100) nach einem der vorhergehenden Ansprüche, ferner umfassend eine Sprachendatenbank (150), die konfiguriert ist, um der Entschlüsselungskomponente (120) eine Wahrscheinlichkeit für spezifische Sequenzen aus Zeichen bereitzustellen.

10. Computerimplementiertes Verfahren (1000) zur Handschrifterkennung, umfassend:
Empfangen (1100), von einer Bewegungssensoreinheit (10), die physisch mit einem beweglichen Teil (1) des Körpers eines Benutzers verbunden ist, von Sensormessdaten (11), die mindestens Beschleunigungsdaten einer Trajektorie (20) umfassen;
Vergleichen (1400) der Sensormessdaten (11) mit einer Vielzahl von vordefinierten technischen Profilen von primitiven Bewegungseinheiten, wobei jedes vordefinierte technische Profil Beschleunigungsdaten beinhaltet, die mit einem Trajektorieabschnitt einer potentiellen Trajektorie der Bewegungssensoreinheit (10) verbunden sind, wobei ein Zeichenmodell durch eine kontextabhängige Sequenz aus zwei oder mehr technischen Profilen definiert ist, wobei jedes technische Profil eine entsprechende primitive Bewegungseinheit als einen spezifischen Abschnitt der potentiellen Trajektorie kennzeichnet, und wobei die Vielzahl von technischen Profilen für zwei konsekutive Trajektorieabschnitte erste technische Profile für entsprechende primitive Bewegungen, die mit einer Pause durchgeführt werden, und zweite technische Profile für entsprechende primitive Bewegungen, die ohne Pause durchgeführt werden, beinhaltet, wobei sich die ersten technischen Profile von den zweiten technischen Profilen unterscheiden;
Identifizieren (1500) eines bestimmten Zeichens, das den empfangenen Sensordaten (11) entspricht, indem ein Ähnlichkeitsergebnis zwischen den empfangenen Messdaten (11) und jeweiligen vordefinierten kontextabhängigen Sequenzen aus vordefinierten technischen Profilen von Zeichenmodellen berechnet wird, wobei das bestimmte Zeichen mit der kontextabhängigen Sequenz aus technischen Profilen mit dem höchsten Ähnlichkeitsergebnis verbunden ist; und
Bereitstellen (1600) einer Repräsentation des identifizierten Zeichens für eine Ausgabevorrichtung (200).

11. Computerimplementiertes Verfahren (1000) nach Anspruch 10, ferner umfassend:
bei Empfang der Sensormessdaten Trennen (1300) von auf Handschrift bezogene Messdaten von anderen Messdaten der Bewegungssensoreinheit (10).

12. Computerimplementiertes Verfahren (1000) nach Anspruch 10 oder 11, wobei die Messdaten ferner Sensordaten eines weiteren Sensors der Bewegungssensoreinheit (10) beinhalten, wobei die weiteren Sensordaten Ausrichtungsdaten, Rotationsdaten und/oder Luftdruckdaten der Bewegungssensoreinheit (10) entsprechen, und wobei die technischen Profile ferner jeweilige vordefinierte Ausrichtungsdaten, Rotationsdaten und/oder Druckdaten beinhalten, die mit den spezifischen Abschnitten der potentiellen Trajektorie der Bewegungssensoreinheit (10) in dem Kontext mindestens eines vorherigen oder folgenden Abschnitts der potentiellen Trajektorie verbunden sind.

13. Computerimplementiertes Verfahren (1000) nach einem der Ansprüche 10 bis 12, wobei jedes technische Profil eine Repräsentation der Sensordaten in einem Merkmalsraum beinhaltet, wobei die Repräsentation charakteristisch für einen jeweiligen spezifischen Abschnitt der potentiellen Trajektorie der Bewegungssensoreinheit (10) ist, ferner umfassend:
Transformieren (1200) der empfangenen Sensordaten (11) in den Merkmalsraum, um die transformierten Daten mit den Repräsentationen in den technischen Profilen zu vergleichen.

14. Computerimplementiertes Verfahren (1000) nach einem der Ansprüche 10 bis 13, ferner umfassend vor dem Schritt des Empfangens von Sensormessdaten (1100):
Empfangen (2100) von Übungsprobedaten (12, 13), die charakteristische Beschleunigungsdaten einer Trajektorie der Bewegungssensoreinheit (10) repräsentieren;
Markieren (2200) der Übungsprobedaten (12, 13) gemäß einem vordefinierten Protokoll, wobei das vordefinierte Protokoll die Verbindung der empfangenen Übungsprobedaten mit einem entsprechenden Zeichen ermöglicht;
Schätzen (2300) von Parametern von technischen Profilen gemäß der besten Passgenauigkeit mit Übungsdaten; und
Speichern (2500) der technischen Profile in einer Datenspeicherkomponente (130).

15. Computerprogrammprodukt, das, wenn es in einen Speicher einer Computervorrichtung geladen und von mindestens einem Prozessor der Computervorrichtung ausgeführt wird, die Schritte des computerimplementierten Verfahrens nach einem der Ansprüche 10 bis 14 ausführt.

## Revendications

1. Système informatique (100) de reconnaissance d'écriture manuscrite, comprenant :
un composant d'interface (110) conçu pour recevoir des données de mesure (11) depuis un ensemble de capteurs de mouvement (10), l'ensemble de capteurs de mouvement (10) étant physiquement accouplé à une partie mobile (1) du corps d'un utilisateur, les données de mesure (11) comprenant des données de capteur d'un capteur de l'ensemble de capteurs de mouvement (10), les données de capteur comprenant au moins des données d'accélération d'une trajectoire (20) ;
un composant de stockage de données (130) conçu pour stocker une pluralité de profils techniques prédéfinis d'unités de mouvement primitif, chaque profil technique prédéfini comprenant des données d'accélération associées à une portion de trajectoire d'une trajectoire potentielle de l'ensemble de capteurs de mouvement (10), un modèle de caractères étant défini par une séquence de deux profils techniques ou plus dépendant du contexte, chaque profil technique caractérisant une unité de mouvement primitif correspondante en tant que portion spécifique de la trajectoire potentielle, et la pluralité de profils techniques comprenant, pour deux portions de trajectoire consécutives, des premiers profils techniques pour des mouvements primitifs correspondants effectués avec une pause et des seconds profils techniques pour des mouvements primitifs correspondants effectués sans pause, les premiers profils techniques étant différents des seconds profils techniques ;
un composant de décodage (120) conçu
pour comparer les données de capteur reçues (11) à la pluralité de profils techniques prédéfinis pour identifier une séquence de portions de la trajectoire (20),
pour identifier un caractère particulier correspondant aux données de capteur reçues (11) par calcul d'un score de similitude entre les données de mesure reçues (11) et des séquences dépendant du contexte prédéfinies respectives, de profils techniques prédéfinis de modèles de caractères, le caractère particulier étant associé à la séquence, dépendant du contexte, de profils techniques présentant le score de similitude le plus élevé, et
pour fournir une représentation du caractère identifié à un dispositif de sortie (200).

2. Système informatique (100) selon la revendication 1, les données de mesure comprenant d'autres données de capteur d'un autre capteur de l'ensemble de capteurs de mouvement (10), les autres données de capteur correspondant à des données d'orientation, des données de rotation et/ou des données de pression d'air de l'ensemble de capteurs de mouvement (10), et les profils techniques comprenant en outre des données d'orientation et/ou des données de rotation prédéfinies respectives associées aux portions spécifiques de la trajectoire potentielle de l'ensemble de capteurs de mouvement (10) dans le contexte d'au moins une portion précédente ou suivante de la trajectoire potentielle.

3. Système informatique (100) selon l'une quelconque des revendications précédentes, chaque profil technique comprenant une représentation des données de capteur dans un espace d'attributs, la représentation étant caractéristique d'une portion spécifique respective de la trajectoire potentielle de l'ensemble de capteurs de mouvement (10), et le composant de décodage (120) étant conçu pour transformer les données de capteur reçues (11) dans l'espace d'attributs pour comparer les données transformées à la représentation dans le profil technique.

4. Système informatique (100) selon l'une quelconque des revendications précédentes, comprenant en outre un composant de détection conçu pour séparer des données de mesure associées à l'écriture manuscrite d'autres données de mesure de l'ensemble de capteurs de mouvement.

5. Système informatique (100) selon l'une quelconque des revendications précédentes, comprenant en outre un dictionnaire (140) conçu pour stocker une ou plusieurs séquences de profils techniques dépendant du contexte pour chaque caractère identifiable, chaque séquence de profils techniques dépendant du contexte étant représentative d'une trajectoire potentielle de l'ensemble de capteurs de mouvement associée à un caractère identifiable.

6. Système informatique (100) selon la revendication 5, de nombreuses séquences de profils techniques dépendant du contexte pour un caractère identifiable spécifique représentant de nombreuses trajectoires potentielles différentes du capteur de mouvement pour écrire le caractère identifiable spécifique.

7. Système informatique (100) selon la revendication 5 ou 6, le dictionnaire (140) étant en outre conçu pour stocker d'autres séquences de profils techniques dépendant du contexte, chaque séquence de profil technique dépendant du contexte étant représentative d'une trajectoire potentielle de l'ensemble de capteurs de mouvement associée à une chaîne de caractères multiples et comprenant un ou plusieurs profils techniques de connexion représentant des portions de connexion de la trajectoire potentielle entre au moins un caractère précédent et un caractère suivant de la chaîne de caractères multiples.

8. Système informatique (100) selon l'une quelconque des revendications précédentes, dans lequel le composant de stockage de données (130) est en outre conçu pour stocker un profil de groupe qui représente un groupe de contextes, le groupe de contextes étant associé à des séquences similaires de profils techniques dépendant du contexte.

9. Système informatique (100) selon l'une quelconque des revendications précédentes, comprenant en outre une base de données de langues (150) conçue pour fournir au composant de décodage (120) une probabilité de séquences de caractères spécifiques.

10. Procédé (1000), mis en oeuvre par ordinateur, de reconnaissance d'écriture manuscrite, comprenant :
la réception (1100), depuis un ensemble de capteurs de mouvement (10) physiquement accouplé à une partie mobile (1) du corps d'un utilisateur, de données de mesure de capteur (11) comprenant au moins des données d'accélération d'une trajectoire (20) ;
la comparaison (1400) des données de mesure de capteur (11) à une pluralité de profils techniques prédéfinis d'unités de mouvement primitif, chaque profil technique prédéfini comprenant des données d'accélération associées à une portion de trajectoire d'une trajectoire potentielle de l'ensemble de capteurs de mouvement (10), un modèle de caractère étant défini par une séquence de deux profils techniques ou plus dépendant du contexte, chaque profil technique caractérisant une unité de mouvement primitif correspondante en tant que portion spécifique de la trajectoire potentielle, et la pluralité de profils techniques comprenant, pour deux portions de trajectoire consécutives, des premiers profils techniques pour des mouvements primitifs correspondants effectués avec une pause et des seconds profils techniques pour des mouvements primitifs correspondants effectués sans pause, les premiers profils techniques étant différents des seconds profils techniques ;
l'identification (1500) d'un caractère particulier correspondant aux données de capteur reçues (11) par calcul d'un score de similitude entre les données de mesure reçues (11) et des séquences dépendant du contexte prédéfinies respectives de profils techniques prédéfinis de modèles de caractères, le caractère particulier étant associé à la séquence dépendant du contexte de profils techniques présentant le score de similitude le plus élevé ; et
la fourniture (1600) d'une représentation du caractère identifié à un dispositif de sortie (200).

11. Procédé (1000), mis en oeuvre par ordinateur, selon la revendication 10, comprenant en outre :
lors de la réception des données de mesure de capteur, la séparation (1300) de données de mesure associées à l'écriture manuscrite d'autres données de mesure de l'ensemble de capteurs de mouvement (10).

12. Procédé (1000), mis en oeuvre par ordinateur, selon la revendication 10 ou 11, les données de mesure comprenant d'autres données de capteur d'un autre capteur de l'ensemble de capteurs de mouvement (10), les autres données de capteur correspondant à des données d'orientation, des données de rotation et/ou des données de pression d'air de l'ensemble de capteurs de mouvement (10), et les profils techniques comprenant en outre des données d'orientation, des données de rotation et/ou des données de pression prédéfinies respectives associées aux portions spécifiques de la trajectoire potentielle de l'ensemble de capteurs de mouvement (10) dans le contexte d'au moins une portion précédente ou suivante de la trajectoire potentielle.

13. Procédé (1000), mis en oeuvre par ordinateur, selon l'une quelconque des revendications 10 à 12, chaque profil technique comprenant une représentation des données de capteur dans un espace d'attributs, la représentation étant caractéristique d'une portion spécifique respective de la trajectoire potentielle de l'ensemble de capteurs de mouvement (10), comprenant en outre :
la transformation (1200) des données de capteur reçues (11) en l'espace d'attributs pour comparer les données transformées aux représentations dans les profils techniques.

14. Procédé (1000), mis en oeuvre par ordinateur, selon l'une quelconque des revendications 10 à 13, comprenant en outre, avant l'étape de réception de données de mesure de capteur (1100) :
la réception (2100) de données d'échantillon d'apprentissage (12, 13) représentant des données d'accélération caractéristiques d'une trajectoire de l'ensemble de capteurs de mouvement (10) ;
l'étiquetage (2200) des données d'échantillon de formation (12, 13) selon un protocole prédéfini, le protocole prédéfini permettant d'associer les données d'échantillon d'apprentissage reçues à un caractère correspondant ;
l'estimation (2300) de paramètres de profils techniques en fonction du meilleur ajustement à des données d'apprentissage ; et
le stockage (2500) des profils techniques dans un composant de stockage de données (130).

15. Produit de programme informatique qui, lorsqu'il est chargé dans une mémoire d'un dispositif informatique et exécuté par au moins un processeur du dispositif informatique, exécute les étapes du procédé mis en oeuvre par ordinateur selon l'une quelconque des revendications 10 à 14.
